(19) Europäisches Patentamt
European Patent Office
Office européen des brevets

(11) **EP 1 882 122 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(51) Int Cl.:
***F16K 31/06*** *(2006.01)* ***F16K 17/04*** *(2006.01)*
***G05D 16/10*** *(2006.01)*

(21) Anmeldenummer: **06723956.6**

(22) Anmeldetag: **01.04.2006**

(86) Internationale Anmeldenummer:
**PCT/EP2006/002997**

(87) Internationale Veröffentlichungsnummer:
**WO 2006/122610 (23.11.2006 Gazette 2006/47)**

(54) **VENTIL, INSBESONDERE PROPORTIONAL-DRUCKBEGRENZUNGSVENTIL**

VALVE IN PARTICULAR A PROPORTIONAL PRESSURE RELIEF VALVE

VALVE, NOTAMMENT VALVE PROPORTIONNELLE DE LIMITATION DE PRESSION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.05.2005 DE 102005022693**

(43) Veröffentlichungstag der Anmeldung:
**30.01.2008 Patentblatt 2008/05**

(73) Patentinhaber: **Hydac Fluidtechnik GmbH**
**66280 Sulzbach/Saar (DE)**

(72) Erfinder:
• **BRUCK, Peter**
**66484 Althornbach (DE)**
• **BILL, Markus**
**66606 St. Wedel (DE)**

(74) Vertreter: **Bartels, Martin Erich Arthur**
**Patentanwälte**
**Bartels und Partner**
**Lange Strasse 51**
**70174 Stuttgart (DE)**

(56) Entgegenhaltungen:
| | |
|---|---|
| DE-A1- 4 438 336 | DE-A1- 10 325 178 |
| US-A- 2 296 132 | US-A- 2 980 132 |
| US-A- 5 496 100 | |

EP 1 882 122 B1

**Beschreibung**

Die Erfindung betrifft ein Ventil, insbesondere Proportional-Druckbegrenzungsventil, mit einem elektrisch ansteuerbaren Magnetsystem zum Ansteuern eines Betätigungsteils gemäß der Merkmalsausgestaltung des Oberbegriffes des Patentanspruches 1.

In Fluidsystemen hat das Druckbegrenzungsventil die Aufgabe, den Systemdruck auf eine bestimmte vorgegebene Druckhöhe zu begrenzen. Wird dieser vorgegebene Wert erreicht, so spricht das Druckbegrenzungsventil an und leitet den überschüssigen Volumenstrom, also den Differenzstrom zwischen Pumpen- und Verbraucherstrom, vom Fluidsystem zur Tankseite hin gerichtet zurück. Neben vorgesteuerten Druckbegrenzungsventilen, auf die an dieser Stelle nicht mehr näher eingegangeniwerden soll, gibt es auch sog. direkt gesteuerte Druckbegrenzungsventile, die von der dynamischen Seite her gesehen wie ein Feder-Masse-System wirken, das in Bewegung gesetzt Schwingungen ausführt. Diese Schwingungen wirken sich auch auf den anstehenden Fluiddruck aus und müssen durch eine Dämpfung entsprechend kompensiert werden. Dabei werden die Impulskräfte des Fluidstromes dazu genutzt, dass die Zunahme der Federkraft im Betrieb des Ventils nahezu ausgeglichen ist.

Um über den gesamten Druckbereich eine gute Drückeinstellung und eine flache Δp-Q-Kennlinie (möglichst geringe Druckerhöhung bei zunehmendem Volumenstrom) zu erhalten, kann der gesamte Druckbereich in Druckstufen unterteilt sein. Der maximal einstellbare Druck ergibt sich dabei aus der maximalen Magnetkraft (Kraft bei Nennstrom des Magnetsystems) und der druckwirksamen Fläche des Ventilsitzes (Kreisfläche des Sitzdurchmessers) gemäß der nachfolgenden Formel:

$$p_{\max} = \frac{F_{Magnet,\max}}{A_{Sitz}} = \frac{F_{Magnet,\max} \cdot 4}{D_{Sitz}^2 \cdot \pi}$$

Ferner ist es bei einer Vielzahl von Ausführungsformen dahingehender Ventile im Stand der Technik bekannt, zur Ansteuerung des Ventilelements ein elektrisch ansteuerbares Magnetsystem mit Betätigungsspule vorzusehen. Bei einer Art an bekannten Lösungen, wie sie auf dem Markt angeboten werden, erfolgt eine direkte Anbindung des Ventilelements in Form eines Schließteils mit konisch zulaufendes Schließkegel an das stangenförmige Betätigungsteil des Magnetsystems, was jedoch im Betrieb des Ventils zu Instabilitäten führen kann aufgrund der Massenträgheit des Magnetankers in Form des Betätigungsteils. Darüber hinaus führt die entstehende Reibung zwischen Betätigungsteil und Ventil-Schließelement zu erhöhter Hysterese beim Betrieb des Ventils.

Es ist im Stand der Technik zwar schon vorgeschlagen worden, um dieses instabile Verhalten zu unterbinden, mittels eines Energiespeichers in Form einer Druckfeder, die sich endseitig am Inneren des Ventilgehäuses abstützt sowie am Ventilelement selbst, das Magnetsystem von der eigentlichen Ventileinheit zu entkoppeln, um dergestalt die Instabilitäten zu vermeiden; allein aufgrund von Maßtoleranzen kommt es insbesondere bei steigenden Fluidvolumenströmen aber zu Winkelverschiebungert zwischen der Achse des Schließkegels und der eigentlichen Verfahrrichtung des Ventit-Schließelementes, so dass nicht auszuschließen ist, dass der Schließkegel nicht exakt sperren kann oder sogar die ihm zugeordnete Sitzkante des Ventilsitzes im Gehäuse beschädigt, mit der Folge, dass das Ventil dann insgesamt nicht mehr leckagefrei abdichten kann.

Durch die DE 44 38 336 A1 ist ein gattungsgemäßes Ventil, insbesondere Proportional-Druckbegrenzungsventil aufgezeigt, mit einem elektrisch ansteuerbaren Magnetsystem zum Ansteuern eines Betätigungsteils, das mit einem Ventilelement zusammenwirkt, das in einem Ventilgehäuse längsverfahrbar geführt ist und das in einer seiner Öffnungsstellungen einen fluidführenden Verbindungsweg zwischen einem Fluidein- und einem- auslaß freigibt und in seiner Sperrstellung den dahingehenden Weg sperrt, wobei zwischen Betätigungsteil und Ventilelement in einem freien Abstand zwischen denselben ein Energiespeicher in Form einer Druckfeder angeordnet ist, die das Ventilelement über seine Anlagefläche in Richtung seiner Schließstellung zu halten sucht, wobei das Betätigungsteil in der Art eines Führungskolbens ausgebildet ist, der eine Längsführung für das Ventilelement aufweist, wobei der Führungskolben eine Außenführung aufweist, mit der er längs des Innenumfangs des Ventilgehäuses verfahrbar ist, und eine Innenführung hat, in der Teile des Ventilelementes eingreifend geführt sind, und wobei das Ventilelement auf seiner dem einen Energiespeicher augewandten Seite einen weiteren Energiespeicher in Form einer weiteren Druckfeder aufweist, die sich mit ihrem einen Ende am Inneren des Ventilgehäuses im Bereich des Fluideinlasses abstützt.

Bei dem bekannten Ventil ist die eine Druckfeder innerhalb des Führungskolbens als Betätigungsteil geführt und stützt sich mit ihrem einen Ende an der Anlagefläche des Ventilelementes ab und mit ihrem anderen Ende an einer in den Führungskolben eingesetzten feststehenden Führungshülse als Teil des Ventilgehäuses. Die weitere Druckfeder hat keinen direkten Einfluß auf das Ventilglied und stützt sich insoweit mit ihrem einen Ende an einer stirnseitigen Verbreiterung des Führungskolbens ab und mit ihrem anderen Ende am Inneren des Ventilgehäuses in Form eines in eine Gehäusebohrung eingepreßten festsitzenden Ventilkörpers im Bereich des Fluideinlasses ab. Das Ventilelement ist an seinem freien stirnseitigen Ende als Schließkalotte ausgebildet, die zwecks Optimierung des Fluidströmungsverlaufes beim Öffnungs- und Schließvorgang mit einer konisch zulaufenden Ventilsitzfläche zusammenwirkt, die sich an eine kreiszylindrische Eintiefung im Ventilkörper anschließt. Eine vergleichbare Ventillösung mit kalottenförmigem Schließglied, bei dem eine erste Druckfeder mit ihrem einen Ende am Ventilglied sich abstützt und eine weitere zweite Druckfeder mit ihrem dahingehend benachbarten Ende an einem den Fluidauslaß ansteuernden Führungskolben, ist durch die US-A-5,496,100 aufgezeigt.

Ausgehend von diesem Stand der Technik liegt der Erfindung die Aufgabe zugrunde, die bekannten Ventillösungen dahingehend weiter zu verbessern, dass ein stabiles Steuerverhalten gewährleistet ist sowie ein lekkagefreier Betrieb bei gleichzeitig niedrigen Herstell- und Wartungskosten. Eine dahingehende Aufgabe löst ein Ventil mit den Merkmalen des Patentanspruches 1 in seiner Gesamtheit.

Dadurch, dass gemäß dem kennzeichnenden Teil des Patentanspruches 1 sich die Druckfeder zwischen der Außenführung des Führungskolbens und einer Randbegrenzung, gebildet durch den Innenumfang des Ventilgehäuses, erstreckt sowie zwischen der Anlagefläche des Ventilelementes und einer Anlagefläche des Führungskolbens, dass die weitere Druckfeder sich mit ihrem anderen Ende gleichfalls am Ventilelement abstützt, und dass das Ventilelement an seiner dem Fluideinlaß zugewandten Seite eine konisch zulaufende Spitze aufweist, die einen Schließkegel bildet, ist das Magnetsystem vom Ventilelement von der Massenträgheit her gesehen weitestgehend entkoppelt, so dass Instabilitäten beim Betrieb des Ventils nicht auftreten und zum anderen wird über die Längsführung erreicht, dass das Ventilelement mit seinem Schließkegel, der vorzugsweise in Sitzausführung mit einem Ventilsitz im Ventilgehäuse zusammenwirkt, immer achsgenau in seine vorgesehene Schließstellung gelangt, so dass die im Stand der Technik auftretenden Winkelverschiebungen mit Leckagen im Bereich des Ventilsitzzes mit Sicherheit vermieden sind. Durch die genannte Entkopplung über den jeweiligen Energiespeicher in Form zweier Druckfedern, die mit ihrem einen Ende jeweils über zuordenbare Anlageflächen direkt am Ventilelement angreifen, arbeitet das erfindungsgemäße Ventil dem Grund nach kraftgesteuert und treten im Betrieb die beschriebenen dynamischen Effekte auf, werden diese von dem jeweiligen Energiespeicher, der direkt am Ventilelement angreift, kompensiert. Dergestalt wird das Ventilelement mit seinem Schließkegel deshalb in deutlich geringerem Maße von der Massenträgheit des Magnetankers, der die Ansteuerung hier vornimmt, beeinflußt als bei den bekannten beschriebenen Lösungen.

Das erfindungsgemäße Ventil benötigt wenig Baukomponenten und ist funktionssicher über eine längere Einsatzzeit hinweg, so dass die Herstell- und Wartungskosten entsprechend niedrig gehalten werden können.

Das erfindungsgemäße Ventil wird als Proportional-Druckbegrenzungsventil in Sitzausführung und in Direktansteuerung vorzugsweise für kleine Fluidvolumenströme bis zu ca. 10 l/min eingesetzt und darüber hinaus kann das Ventil bevorzugt Anwendung finden bei sog. Vorsteueraufgaben, beispielsweise dem Aufbau von vorgesteuerten Druckbegrenzungs- oder Druckregelsystemen dienen.

Weitere vorteilhafte Ausführungsformen des erfindungsgemäßen Ventils sind Gegenstand der Unteransprüche.

Im folgenden wird das erfindungsgemäße Ventil anhand eines Ausführungsbeispiels nach der Zeichnung näher erläutert. Dabei zeigen in prinzipieller und nicht maßstäblicher Darstellung die

Fig.1   teilweise im Längsschnitt, teilweise in Ansicht, ein Ventil in Form eines Proportional-Druckbegrenzungsventils nach dem Stand der Technik;

Fig.2   eine der Fig.1 entsprechende Darstellung mit dem erfin- dungsgemäßen Ventil, wobei in Blickrichtung auf die Fig.2 gesehen links oben das hydraulische Schaltsymbol für das er- findungsgemäße Ventil wiedergegeben ist.

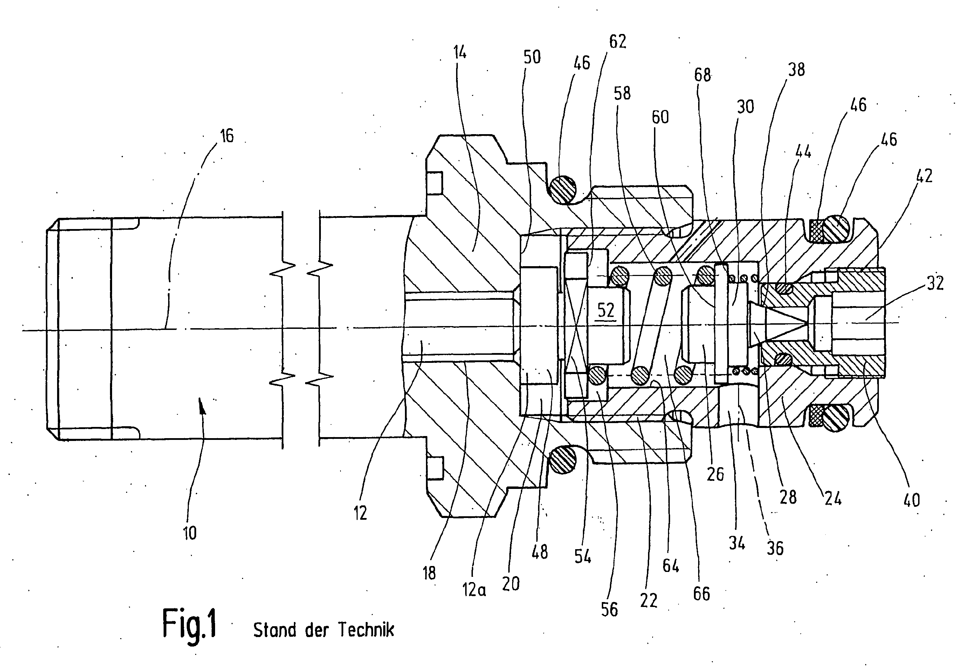

Das bekannte, direkt gesteuerte Proportional-Druckbegrenzungsventil in Sitzausführung nach der Fig. 1 ist mit einem als Ganzes mit 10 bezeichneten elektrisch ansteuerbaren Magnetsystem versehen. Dahingehende Magnetsysteme zum Ansteuern von Ventilen sind im Stand der Technik (DE 44 16 279 A1) hinreichend bekannt, wobei mittels einer Betätigungsspule (nicht dargestellt) des Magnetsystems 10 ein Magnetanker in Form eines stangenförmigen Betätigungsteils 12 in der Art eines Kolbenteils ansteuerbar ist. Bei der gezeigten Ausführungsform ist das Magnetsystem 10 als sog. drükkender Magnet ausgebildet, der im bestromten Zustand das Betätigungsteil 12 in Blickrichtung auf die Figur gesehen von links nach rechts bewegt und im unbestromten Zustand wird das Betätigungsteil 12 über eine Energiespeicheranordnung wieder rückgestellt, was im folgenden noch näher beschrieben werden wird.

Das Gehäuse 14 des Magnetsystems 10 ist in der Art einer Einschraubpatrone ausgeführt und weist entlang der Längsachse 16 des Ventils eine Mittenbohrung 18 auf, die von dem stangenförmigen Betätigungsteil 12 durchgreifbar ist. Die dahingehende Mittenbohrung 18 mündet mit ihrem freien Ende in einen Erweiterungsraum 20 mit Innengewinde 22, in das ein korrespondierend ausgebildetes Ventilgehäuse 24 mit seinem Außengewinde einschraubbar ist. Des weiteren ist innerhalb des Ventilgehäuses 24 entlang der Längsachse 16 längsverfahrbar ein Ventilelement 26 geführt, das einen Schließkegel oder Schließkonus 28 aufweist sowie ein sich anschließendes Ventil-Schließelement 30.

In seiner gezeigten Stellung verschließt das Ventilelement 26 den möglichen Fluidweg zwischen einem Fluideinlaß 32 und einem Fluidauslaß 34. Der Fluideinlaß 32 ist stirnseitig am freien Ende des Ventilgehäuses 24 angeordnet und verläuft koaxial zur Längsachse 16 des Ventils. Der Fluidauslaß 34 hingegen ist in der Art einer Querbohrung ausgebildet, die die Ventilgehäusewandung durchgreift und mit ihrer Querachse 36 steht diese senkrecht auf der genannten Längsachse 16. Zum Verlassen seiner Sperrstellung ist das Ventilelement 26 in Blickrichtung auf die Figur gesehen nach links zu bewegen in einer seiner Öffnungsstellungen, bei der der angesprochene Fluidweg dann freigegeben ist. Hierbei hebt der Schließkegel 28 von einer ringförmigen Anlagefläche 38 als Ventilsitz eines Ventileinsatzes 40 ab. Der dahingehende Ventileinsatz 40, der den Fluideinlaß 32 des Ventils umfaßt, ist über ein Außengewinde 42 längseinstellbar zur Längsachse 16 und zur möglichen Verfahrrichtung des Schließkegels 28 in das freie Ende des sonstigen Ventilgehäuses 24 einsetzbar, insbesondere einschraubbar.

Über die dahingehende Längseinstellung des Ventileinsatzes 40 läßt sich eine Feinpositionierung für den Ventilsitz 38 erreichen und somit eine Feinabstimmung herbeiführen, was das Einsetzverhalten beim Schließen des Schließkegels 28 am Ventilsitz 38 anbelangt. Ferner weist der stopfenartige Ventileinsatz 40 außenumfangsseitig in einer Nutvertiefung einen Dichtring 44 auf, und weitere ringförmige Dichtsysteme 46 sind außenumfangsseitig am Magnetsystem-Gehäuse 14 angeordnet sowie am freien Ende des Ventilgehäuses 24, um dergestalt das Gesamt-Ventilsystem als Einschraubventil auszubilden.

Wie sich des weiteren aus der Figur ergibt, schließt sich an das stangenförmige Betätigungsteil 12 ein weiteres Betätigungsteil 12a in der Art eines zweiten Kolbenteils an, das an seiner dem stangenförmigen Betätigungsteil 12 zugewandten Seite einen zylindrischen Anlageflansch 48 mit im Durchmesser verbreitertem Querschnitt aufweist, der sich in der gezeigten Schaltdarstellung an einer benachbarten Wandfläche 50 des Gehäuses 14 des Magnetsystems 10 abstützt. Auf seiner, dem Betätigungsteil 12 gegenüberliegenden Seite schließt sich an den Anlageflansch 48 ein Führungsteil 52 an, das über eine Einschraubstrecke (nicht dargestellt) verfügt, längs der sich eine Einstellmutter 54 justieren läßt. Zur Realisierung der dahingehenden Einstellung weist das Ventilgehäuse 24 eine sich verbreiternde Ausnehmung 56 kreisrunden Querschnitts auf. Zwischen dem genannten Betätigungsteil 12a und dem Ventilelement 26 ist ein Energiespeicher in Form einer Druckfeder 58 angeordnet. Die dahingehende Druckfeder 58 sucht mit ihrer Federkraft das Ventilelement 26 in seiner in der Figur gezeigten Schließstellung zu halten.

Auch das Ventilelement 26 weist eine im Durchmesser sich erweiternde Anlagefläche 60 auf, die im Durchmesser aber kleiner ist als die benachbarte Anlagefläche 62 des Betätigungsteils 12a. Zwischen den Anlageflächen 60,62 erstreckt sich die Druckfeder 58 mit ihren beiden voneinander abgewandten Enden und, wie sich aus der Figur ergibt, sind zwischen den einander benachbart zugewandten Seiten von Betätigungsteil 12a und Ventilelement 26 keine weiteren konstruktiven Bestandteile mehr vorhanden, bis auf die gebildete Randbegrenzung durch den Innenumfang 64 des Ventilgehäuses 24. Zwischen den einander zugewandten Seiten von Betätigungsteil 12a und Ventilelement 26 ist ein Hohlraum 66 gebildet.

Um beim Fluideintritt über den Fluideinlaß 32 ein sicheres Abheben des Schließkegels 28 vom Ventilsitz 38 erreichen zu können, wird die dahingehende Abhebebewegung durch einen weiteren Energiespeicher in Form einer weiteren Druckfeder 68 unterstützt, die jedoch eine deutlich geringere Federsteifigkeit aufweist als die erstgenannte Druckfeder 58. Des weiteren läßt sich das Federkraftverhalten von Druckfeder 58 und Druckfeder 68 über die Einstellmutter 54 vor Inbetriebnahme des Ventils sinnfällig einstellen. Um Hemmnisse im Betrieb zu vermeiden, ist das stangenartige Betätigungsteil 12 nur in loser Anlage mit der zugewandten Stirnseite des zylindrischen weiteren Betätigungsteils 12a ausgebildet und nicht einstückig mit diesem verbunden. Um einen gleichmäßigen Fluideinlaß über die Einlaßstelle 32 zu gewährleisten, verjüngt sich der Einströmquerschnitt in Blickrichtung auf die Figur gesehen von rechts nach links. Ferner ist der angesprochene Hohlraum 66 in Längsrichtung parallel zur Längsachse 16 des Ventils derart bemessen, dass jedenfalls die nächst benachbarten Seiten von Betätigungsteil 12a und Ventilelement 26 nicht aneinander anstoßen können, sondern noch durch die Druckfeder 58 wirksam auseinandergehalten werden, auch wenn diese eine sehr weit zusammengepreßte Stellung einnimmt.

Mit dem erfindungsgemäßen Druckbegrenzungsventil lassen sich über eine Direktansteuerung Druckwerte vorgeben, bei deren Überschreiten am Fluideinlaß 32 entgegen der Magnetkraft des Magnetsystems 10 und entgegen der Kraft der Druckfeder 58 der Schließkegel 28 unterstützt von der weiteren Druckfeder 68 vom Ventilsitz 38 abhebt und den Fluidweg von Fluideinlaß 32 zum Fluidauslaß 34 (Tankseite) hin freigibt. In umgekehrter Kraftrichtung kann dann bei abfallendem Druck auf der Fluideinlaßseite 32 das Ventil über den Schließkegel 28 wieder geschlossen werden.

Mit der bekannten Lösung ist zwar bis auf die Druckfeder 58 eine im wesentlichen massefreie Entkopplung von Magnetsystem 10 gegenüber dem eigentlichen Ventilsystem mit dem Ventilelement 26 erreicht, so dass die Massenträgheit des Magnetankers in Form der Betätigungsteile 12,12a wirksam über den zwischengeschalteten Energiespeicher (Druckfeder 58) reduziert ist; dennoch kann es aufgrund der Maßtoleranzen der Druckfeder dazu kommen, dass insbesondere bei ansteigenden Volumenströmen es zu Winkelverschiebungen kommt zwischen dem Schließkegel 28 und der Längsachse 16 des eigentlichen Ventilkörpers, was zu den bereits beschriebenen Problemen führt, insbesondere, dass der Schließkegel 28 die Sitzkante des Ventilsitzes 38 beschädigen kann, mit der Folge, dass dann das Ventil nicht mehr leckagefrei abdichtet, was dessen Funktionsfähigkeit deutlich beeinträchtigt.

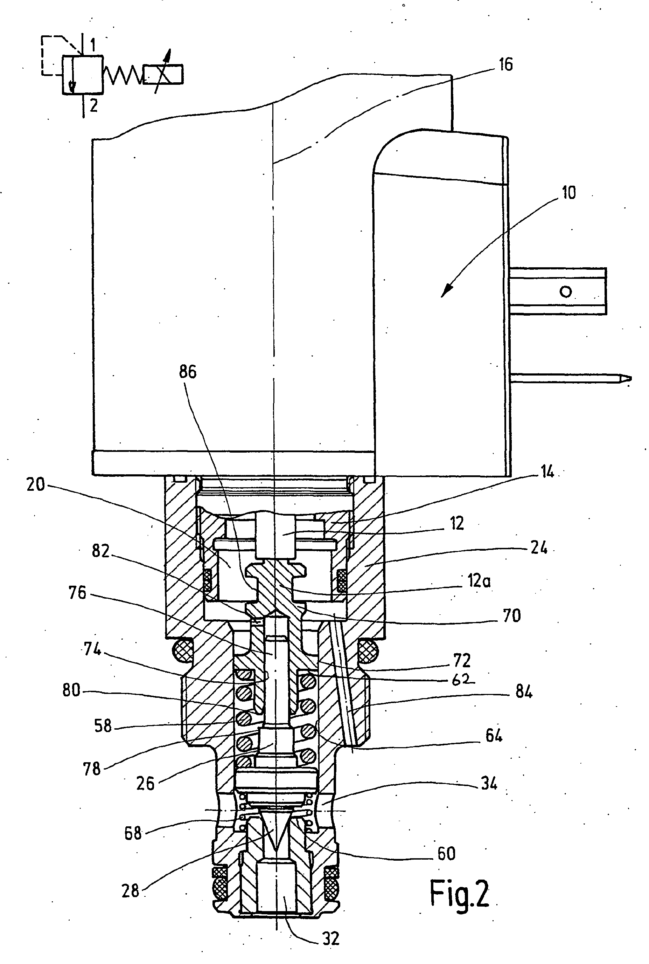

Die in der Fig.2 aufgezeigte erfindungsgemäße Ventillösung vermeidet dies mit den im einzelnen nachfolgend beschriebenen, erfindungsgemäßen Maßnahmen, wobei, um Wiederholungen zu vermeiden, dieselben Bauteile wie nach der Fig.1 zum Stand der Technik mit denselben Bezugszeichen wiedergegeben sind, wobei die bisher getroffenen Ausführungen dann auch für die erfindungsgemäße Ausführungsform nach der Fig.2 gelten sollen.

Das Betätigungsteil 12a ist in der Art eines Führungskolbens 70 ausgebildet, der eine Längsführung für das Ventilelement 26 aufweist. Hierzu weist der Führungskolben 70 zunächst eine Außenführung 72 auf, mit der er längs des Innenumfanges 64 des Ventilgehäuses 24 verfahrbar ist und des weiteren verfügt er über eine Innenführung 74, in die Teile des Ventilelements 26 eingreifend geführt sind. Die Innenführung 74 ist aus einer Mittenbohrung im Führungskolben 70 gebildet, die sich entlang der Längsachse 16 des Ventilgehäuses 24 erstreckt, wobei die zu führenden Teile des Ventilelementes 26 aus einem Führungszapfen 76 gebildet sind, der, wie in der Fig.2 dargestellt, in die Mittenbohrung eingreift. Die Außenführung 72 ist in axialer Richtung kurz bemessen, um Reibwerte niedrig zu halten. Ferner befindet sich die schulterförmige Außenführung 72 in der unteren Hälfte des Führungskolbens 70, die der Druckfeder 58 zugewandt ist.

Die axiale Länge der Mittenbohrung ist größer gewählt als die Länge des zylindrischen Führungszapfens 76, der in Richtung auf den Schließkegel 28 mit einer Anschlagschulter 78 versehen ist, die den Verfahrweg des stirnseitig freien Endes 80 des Führungskolbens 70 entsprechend begrenzt. Der Energiespeicher in Form der Druckfeder 58 erstreckt sich zwischen der Außenführung 72 des Führungskolbens 70 und der Anlagefläche 60 des Ventilelementes 26. Ebenso wie in der Fig.1 ist in der Fig.2 das Ventil in seiner Schließstellung dargestellt und in Richtung seiner Öffnungsstellung ist der Verfahrweg des Ventilelementes 26 in Blickrichtung auf die Fig.2 gesehen nach oben hin durch die Anschlagschulter 78 begrenzt. Um einen Druckausgleich herbeiführen zu können, ist der Führungskolben 70 von einer Querbohrung 82 durchgriffen, die das Innere der Mittenbohrung mit dem Erweiterungsraum 20 verbindet. Der dahingehende Erweiterungsraum 20 weist im Ventilgehäuse 24 eine schräg nach unten verlaufende Verbindungsbohrung 84 auf, die als Leckageablauf dient. Ferner übergreift bei der Ausführungsform nach der Fig.2 das Ventilgehäuse 24 außenumfangsseitig das Gehäuse 14 des Magnetsystems 10. Um die zu bewegende Masse des Führungskolbens 70 gering zu halten, weist dieser im Bereich der Anlagefläche zum stangenförmigen Betätigungsteil 12 des Magnetsystems 10 eine Ringaussparung 86 auf. Ferner ist der Führungskolben 70 sehr schlank gehalten und weist nur zum Herstellen der Außenführung 72 eine schulterartige Verbreiterung an seiner Außenumfangsfläche auf.

Mit der erfindungsgemäßen Lösung ist über die Druckfeder 58 eine massefreie Entkopplung von Magnetsystem 10 gegenüber dem eigentlichen Ventilsystem mit dem Ventilelement 26 erreicht, so dass die Massenträgheit des Magnetankers in Form der Betätigungsteile 12,12a wirksam über den zwischengeschalteten Energiespeicher (Druckfeder 58) reduziert ist. Instabilitäten des Systems, wie sie beispielsweise auftreten können durch große Druck- oder Volumenschwankungen sowie durch Pulsationen am Fluideinlaß 32 lassen sich dergestalt wirksam aussteuern, um so die Funktionssicherheit des Druckbegrenzungsventils in einem weiten Bereich sicherzustellen.

Bei der gezeigten Ausführungsform nach der Fig.2 ist sowohl eine Kontraktion der Feder 58 über die innere Führung als auch ein Bewegen des kompletten Federpaketes im Ventilkörper möglich. Die Entkoppelfeder 58 ist sehr steif ausgeführt. Dadurch arbeitet das Ventil im Prinzip kraftgesteuert. Darüber hinaus ist aufgrund der angesprochenen Führung erreicht, dass das Ventilelement 26 mit seinem Schließteil 28 immer achsgenau in seine vorgesehene Schließstellung gelangt, so dass die im Stand der Technik auftretenden Winkelverschiebungen mit Leckagen durch Schädigungen des Ventilsitzes 38 mit Sicherheit vermieden sind.

Das erfindungsgemäße Ventil arbeitet sehr funktionssicher und kommt mit wenigen Baukomponenten aus, was die Herstellkosten senken hilft. Das Ventil läßt sich zeitlich lang andauernd einsetzen, so dass auch insoweit die Wartungskosten reduziert sind. Das Proportional-Druckbegrenzungsventil kann generell als Druckbegrenzungsventil für kleine Volumenströme (bis zu 10 l/min) eingesetzt werden, darüber hinaus findet das Ventil bevorzugt Anwendung bei Vorsteueraufgaben, z.B. zum Aufbau von vorgesteuerten Druckbegrenzungs- oder Druckregelsystemen.

**Patentansprüche**

1. Ventil, insbesondere Proportional-Druckbegrenzungsventil, mit einem elektrisch ansteuerbaren Magnetsystem (10) zum Ansteuern eines Betätigungsteils (12,12a), das mit einem Ventilelement (26) zusammenwirkt, das in einem Ventilgehäuse (24) längsverfahrbar geführt ist und das in einer seiner Öffnungsstellungen einen fluidführenden Verbindungsweg zwischen einem Fluidein(32)- und einem -auslaß (34) freigibt und in seiner Sperrstellung den dahingehenden Weg sperrt, wobei zwischen Betätigungsteil (12,12a) und Ventilelement (26) in einem freien Abstand zwischen denselben ein Energiespeicher in Form einer Druckfeder (58) angeordnet ist, die das Ventilelement (26) über seine Anlagefläche (60) in Richtung seiner Schließstellung zu halten sucht, wobei das Betätigungsteil (12a) in der Art eines Führungskolbens (70) ausgebildet ist, der eine Längsführung für das Ventilelement (26) aufweist, wobei der Führungskolben (70) eine Außenführung (72) aufweist, mit der er längs des Innenumfangs (64) des Ventilgehäuses (24) verfahrbar ist, und eine Innenführung (74) hat, in der Teile des Ventilelementes (26) eingreifend geführt sind, und wobei das Ventilelement (26) auf seiner dem einen Energiespeicher abgewandten Seite einen weiteren Energiespeicher in Form einer weiteren Druckfeder (68) aufweist, die sich mit ihrem einen Ende am Inneren des Ventilgehäuses im Bereich des Fluideinlasses (32) abstützt, **dadurch gekennzeichnet, dass** sich die Druckfeder (58) zwischen der Innenführung (74), des Führungskolbens (70) und einer Randbegrenzung, gebildet durch den Innenumfang (64) des Ventilgehäuses (24), erstreckt sowie zwischen der Anlagefläche (60) des Ventilelementes (26) und einer Anlagefläche (62) des Führungskolbens (70), dass die weitere Druckfeder (68) sich mit ihrem anderen Ende gleichfalls am Ventilelement (26) abstützt, und dass das Ventilelement (26) an seiner dem Fluideinlaß (32) zugewandten Seite eine konisch zulaufende Spitze aufweist, die einen Schließkegel (28) bildet.

**2.** Ventil nach Anspruch 1, **dadurch gekennzeichnet, dass** die Innenführung (74) aus einer Mittenbohrung im Führungskolben (70) gebildet ist, die sich entlang der Längsachse (16) des Ventilgehäuses (24) erstreckt, und dass die zu führenden Teile des Ventilelementes (26) aus einem Führungszapfen (76) gebildet sind, der in die Mittenbohrung eingreift.

**3.** Ventil nach Anspruch 2, **dadurch gekennzeichnet, dass** die Länge der Mittenbohrung größer gewählt ist als die Länge des Führungszapfens (76), der in Richtung auf den Schließkegel (28) mit einer Anschlagschulter (78) versehen ist, die den Verfahrweg des stirnseitig freien Endes (80) des Führungskolbens (70) begrenzt.

**4.** Ventil nach einem der Ansprüche 1 bis 3, **dadurch gekennzeichnet, dass** die jeweilige Druckfeder (58), angeordnet zwischen Betätigungsteil (12,12a) und Ventilelement (26), mit hoher Federsteifigkeit ausgeführt ist.

**5.** Ventil nach einem der Ansprüche 1 bis 4, **dadurch gekennzeichnet, dass** die Federsteifigkeit der jeweils weiteren Druckfeder (68) kleiner ist als die Federsteifigkeit der jeweils einen Druckfeder (58).

**6.** Ventil nach einem der Ansprüche 1 bis 5, **dadurch gekennzeichnet, dass** das Betätigungsteil (12,12a) aus zwei Kolbenteilen gebildet ist, wobei das eine (12) von dem Magnetsystem (10) direkt ansteuerbar ist und das weitere (12a) ist von dem ersten Betätigungsteil (12) angesteuert.

## Claims

**1.** A valve, in particular a proportional pressure limiting valve, having an electrically actuatable magnetic system (10) for actuating an actuation part (12, 12a) which co-operates with a valve element (26) which is guided with longitudinal travel within a valve housing (24) and which in one of its opening positions opens up a fluid-conveying connection path between a fluid inlet (32) and a fluid outlet (34), and in its blocking position blocks the path to this effect, there being disposed between the actuation part (12, 12a) and the valve element (26), any distance between the latter, an energy store in the form of a pressure spring (58) which seeks to hold the valve element (26) over its bearing surface (60) in the direction of its closing position, the actuation part (12a) being designed in the manner of a guide piston (70) which has a longitudinal guide for the valve element (26), the guide piston (70) having an outer guide (72) with which it can travel along the inner circumference (64) of the valve housing (24), and an inner guide (74) in which parts of the valve element (26) are guided, when engaged, and the valve element (26) having on its side facing away from the one energy store a further energy store in the form of a further pressure spring (68) which is supported with its one end on the inside of the valve housing in the region of the fluid inlet (32), **characterised in that** the pressure spring (58) extends between the inner guide (74) of the guide piston (70) and a peripheral limit, formed by the inner circumference (64) of the valve housing (24) and between the bearing surface (60) of the valve element (26) and a bearing surface (62) of the guide piston (70), that the further pressure spring (68) is likewise supported with its other end on the valve element (26), and that the valve element (26) forms on its side facing towards the fluid inlet (32) a conically extending point which forms a closing cone (28).

**2.** The valve according to Claim 1, **characterised in that** the inner guide (74) is formed by a central bore hole within the guide piston (70) which that the parts of the valve element (26) to be guided are formed by a guide pin (76) which engages in the central bore hole.

**3.** The valve according to Claim 2, **characterised in that** the length of the central bore hole is chosen to be greater than the length of the guide pin (76) which is provided with a stop shoulder (78) in the direction of the closing cone (28) which limits the path of travel of the face side free end (80) of the guide piston (70).

**4.** The valve according to any of Claims 1 to 3, **characterised in that** the respective pressure spring (58), disposed between the actuation part (12, 12a) and the valve element (26) is designed with a high degree of spring stiffness.

5. The valve according to any of Claims 1 to 4, **characterised in that** the spring stiffness of the respective further pressure spring (68) is less than the spring stiffness of the respective one pressure spring (58).

6. The valve according to any of Claims 1 to 5, **characterised in that** the actuation part (12, 12a) is formed by two piston parts, the one (12) being directly actuatable by the magnetic system (10), and the further one (12a) being actuated by the first actuation part (12).

**Revendications**

1. Vanne, notamment vanne proportionnelle de limitation de pression, comprenant un système (10) magnétique pouvant être commandé électriquement pour commander une partie (12, 12a) d'actionnement, qui coopère avec un élément (26) de vanne, qui est guidé en pouvant se déplacer longitudinalement dans un corps (24) de vanne et qui dégage, dans l'une de ses positions d'ouverture, un trajet de liaison fluidique entre une entrée (32) et une sortie (34) du fluide et qui, dans sa position de fermeture, obture ce trajet, dans lequel il est monté entre la partie (12, 12a) d'actionnement et l'élément (26) de vanne à une distance quelconque entre eux un accumulateur d'énergie sous la forme d'un ressort (58) de pression, qui tend à maintenir l'élément (26) de vanne par sa surface (60) d'appui dans la direction de sa position de fermeture, la partie (12a) d'actionnement étant constituée à la façon d'un piston (70) de guidage, qui a un guidage longitudinal pour l'élément (26) de vanne, le piston (70) de guidage ayant un guidage (72) extérieur par lequel il peut être déplacé le long du pourtour (64) intérieur du corps (24) de la vanne et un guidage (74) intérieur, dans lequel des parties de l'élément (26) de la vanne sont guidées en y pénétrant, et dans lequel l'élément (26) de vanne a, sur son côté éloigné d'un accumulateur d'énergie, un autre accumulateur d'énergie sous la forme d'un autre ressort (68) de compression, qui s'appuie par l'une de ses extrémités à l'intérieur du corps de la vanne dans la zone de l'entrée (32) pour du fluide, **caractérisé en ce que** le ressort (68) de compression s'étend entre le guidage (74) intérieur du piston (70) de guidage et une démarcation de bord formé par le pourtour (64) intérieur du corps (24) de la vanne ainsi qu'entre la surface (60) d'appui de l'élément (26) de la vanne et une surface (62) d'appui du piston (70) de guidage **en ce que** l'autre ressort (68) de compression s'appuie par son autre extrémité également sur l'élément (26) de la vanne et **en ce que** l'élément (26) de la vanne a, sur son côté tourné vers l'entrée (32) pour du fluide, une pointe conique qui forme un cône (28) d'obturation.

2. Vanne suivant la revendication 1, **caractérisée en ce que** le guidage (74) intérieur est formé d'un trou médian dans le piston (70) de guidage, qui s'étend le long de l'axe longitudinal du corps (24) de la vanne et **en ce que** les parties à guider de l'élément (26) de la vanne sont formées d'un tourillon (76) de guidage qui pénètre dans le trou médian.

3. Vanne suivant la revendication 1, **caractérisée en ce que** la longueur du trou médian est choisie plus grande que la longueur du tourillon (76) de guidage, qui est muni, dans la direction allant vers le cône (28) d'obturation, d'un épaulement (78) formant butée, qui limite le trajet de déplacement de l'extrémité (80) libre du côté frontal du piston (70) de guidage.

4. Vanne suivant l'une des revendications 1 à 3, **caractérisée en ce que** le ressort (58) de compression respectif disposé entre la partie (12, 12a) d'actionnement et l'élément (26) de la vanne est réalisée en ayant une grande raideur.

5. Vanne suivant la revendication 1 à 4, **caractérisée en ce que** la raideur de l'autre ressort (68) de compression est plus petite que la raideur du ressort (58) de compression.

6. Vanne suivant l'une des revendications 1 à 5, **caractérisée en ce que** la partie (12, 12a) d'actionnement est formée de deux parties de piston, l'une (12) pouvant être commandée directement par le système (10) magnétique, tandis que l'autre (12a) est commandée par la première partie (12) d'actionnement.

Fig.1 · Stand der Technik

Fig.2

9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4438336 A1
- US 5496100 A

- DE 4416279 A1